Europäisches Patentamt

European Patent Office

Office européen des brevets

(11) Publication number: **0 609 946 A1**

# EUROPEAN PATENT APPLICATION

(21) Application number: **94200261.9**

(22) Date of filing: **01.02.94**

(51) Int. Cl.5: **D01F 6/60**, B29D 23/22, B29D 29/00, B29D 30/06, F16L 11/08, //B29K21/00, B29K105/06

(30) Priority: **05.02.93 NL 9300235**

(43) Date of publication of application: **10.08.94 Bulletin 94/32**

(84) Designated Contracting States: **BE DE ES FR GB GR IE IT LU NL PT SE**

(71) Applicant: **Akzo Nobel N.V. Velperweg 76 NL-6824 BM Arnhem(NL)**

(72) Inventor: **van der Pol, Johan Franciscus Monnikenweerd 3 NL-6862 TA Oosterbeek(NL)**

(74) Representative: **Schalkwijk, Pieter Cornelis Akzo Nobel N.V. Patent Department P.O. 9300 NL-6800 SB Arnhem (NL)**

(54) Product comprising reinforcing fibres of aromatic polyamide.

(57) The invention relates to a product capable of taking mechanical load, comprising reinforcing fibres of aromatic polyamide, and is characterised in that the individual fibres or filaments have a linear density of 0,8 to 1,3 decitex, more particularly of 1,0 to 1,2 decitex. Preferably, the reinforcing filaments are provided in an elastomeric matrix. Favourable results have notably been obtained in the case of radiator hose reinforced with PPDT filament yarns.

EP 0 609 946 A1

Rank Xerox (UK) Business Services
(3.10/3.09/3.3.4)

The invention relates to a product capable of taking mechanical load, comprising reinforcing fibres of aromatic polyamide. The invention further comprises a process for manufacturing a product capable of taking mechanical load which is made up of a matrix reinforced with fibres of aromatic polyamide.

Such a product is known from, int. al., US 4 016 236, which describes the utilisation of aromatic polyamide yarns in industrial applications such as tyre cord or cords for reinforcing V-belts, flat belts, and hose.

Although quite reasonable results can be attained by means of this known practice, it has surprisingly been found that products having greatly enhanced properties may be obtained when, according to the invention, the individual fibres of aromatic polyamide put to said products have a linear density of 0,8 to 1,3 decitex, more particularly of 1,0 to 1,2 decitex, and preferably of about 1,1 decitex. The product according to the invention is characterised with advantage in that fibres in the form of filament yarns provided in a matrix of an elastomeric material, e.g., rubber or thermoplastic elastomers, are employed. The product is characterised according to the invention in that the fibres are made of poly-paraphenylene terephthalamide (PPDT) and the filament yarns have a twist of 50 to 600 tpm, with the filament yarns each having an overall linear density of 400 to 3500 decitex, preferably of about 1100 decitex, while the filament yarns each contain 400 to 3000 filaments, preferably about 1000 filaments. Also, according to the invention, filament yarns may be employed which are tangled. An effective embodiment of said product is characterised according to the invention in that the filament yarns are present in the form of a cord which is generally made up of twisted yarns, with or without an adhesive. According to the invention, the yarns or cords used may be provided with an adhesive, e.g., a resorcinol formaldehyde-latex based adhesive, to promote their adhesion to a matrix, in which matrix, according to the invention, the fibres may be present in the woven fabric, knitted fabric, web, braid, or spiralised form.

An especially favourable product capable of taking mechanical load is characterised according to the invention in that the product is a hose, such as a radiator hose or a high pressure hose. Radiator hose find widespread use in water-cooled car engines, where they are subjected to mechanical loads. Having generally been constructed with several bends in the restricted amount of space under the bonnet, radiator hose are subjected to heavy dynamic loads over prolonged periods of time at elevated temperature, notably because of vibrations and roughnesses in the road surface. According to the invention, it has surprisingly been found that radiator hose reinforced with PPDT filament yarns having a linear density of the individual filaments, i.e., a filament count, of 0,8 to 1,3 decitex have a significantly improved fatigue resistance. Consequently, using the radiator hose according to the invention is expected to produce a longer working life, less risk of bursting, and the opportunity to apply higher loads. When a radiator hose is used or tested, the yarn is exposed to a wide range of effects. As a result, many of the yarn properties play a part when it comes to determining the bursting pressure, particularly after dynamic/mechanical load. In radiator hose with a reinforcing layer in the form of a knitted fabric, these properties include: loop strength, linear strength, resistance to chemicals, heat durability, susceptibility to transverse forces, flexural fatigue behaviour, and abrasion resistance. Some of these properties are dependent on efficient washing during the spinning process, the number of cavities introduced during the spinning process, the shape of the filaments, and core-shell effects. Thus, at a low filament count a decreased resistance to chemicals is expected because of an increase in surface area, though in the case of longer loading times in the hose this is compensated for to some extent by improved acid neutralisation during the spinning process. A smaller filament diameter is expected to lead to reduced abrasion resistance. By contrast, the abrasion resistance will be affected positively by smaller differences between the properties of the filament shell and those of the filament core when the filament count is low. On the other hand, research has shown that at lower filament counts there is an increase in the double loop strength and the linear strength, and the susceptibility to transverse forces is expected to decrease due to smaller core-shell effects. It is impossible to tell in advance what the effect of these combined properties will be on the long-term behaviour of a radiator hose. Hence, it was surprising to find that, according to the invention, the use of PPDT yarns with a low filament count as reinforcing material in radiator hose has a particularly favourable effect on the hose's fatigue resistance.

In the product according to the invention, the optionally twisted filament yarns in a radiator hose preferably are present in an elastomeric matrix in the knitted fabric, braid, or spiralised form.

The application of the product of the invention is also considered extremely favourable in the case of high pressure hose. Such hose are widely used in hydraulic systems for transporting liquids under high and/or fluctuating pressures, which transports involve greatly varying mechanical loads.

Other favourable applications according to the invention are characterised in that the product capable of taking mechanical load is a drive belt, such as a V-belt, or a conveyor belt. In addition, the product according to the invention may be characterised in that the product is a pneumatic tyre, such as a bicycle tyre, more particularly a radial-ply tyre or a cross-ply tyre for an automobile or an aircraft, where the reinforcing fibres may be arranged in the carcass and/or one or more belt strips. In pneumatic tyres the fibres are generally employed in the form of cords and woven fabrics.

The invention also comprises a process for the manufacture of a product capable of taking mechanical load consisting of a matrix reinforced with fibres of aromatic polyamide, the process being characterised in that use is made of fibres, more particularly in the form of filament yarns, having a linear density for the individual fibres or filaments of 0,8 to 1,3 decitex, preferably of 1,0 to 1,2 decitex, and with the matrix employed being based on an elastomeric material, such as rubber or thermoplastic elastomer, while the fibres used preferably are of poly-paraphenylene terephthalamide.

The process is advantageously characterised according to the invention in that use is made of filament yarns having a twist of 50 to 600 tpm or of tangled yarns, the overall linear density being 400 to 3500 decitex, preferably about 1100 decitex. According to a preferred process, the filament yarns are used in the form of cords and provided with an adhesive, for instance a resorcinol-formaldehyde latex based adhesive, to promote their adhesion to the matrix.

A major advantage resides in that, according to the invention, the PPDT fibres to be employed can be manufactured by means of applicant's highly effective spinning process, which has been described in, int. al., EP 0 168 879 B1 in the name of applicant. What is significant about the fibres used according to the invention is that they require no tensionless drying during their manufacture.

It should be noted that PPDT filament yarns with a comparatively low filament count, viz. about 1 dtex, are known in their nature from US 3 767 756.

US 4 374 977 discloses a complex and not very efficient spinning process for preparing fibres from aromatic polyamide which display favourable fatigue resistance. It is stated that the linear density of a monofilament in that case should be in the range of about 0,11 to 3,3 decitex.

The Table below lists the properties of three PPDT yarns of the trade designation Twaron®. The A-type yarn exemplifies the yarn to be used according to the invention. The B- and C-type yarns are comparative examples of a yarn not to be used according to the invention. In addition, the Table gives the measuring data for the static bursting pressure (SBP) and the bursting pressure after dynamic/mechanical load (DBP) as measured on radiator hose reinforced with yarns of the A, B, or C type.

EP 0 609 946 A1

| Properties | Yarn type A (acc. to invention) Twaron® 1000f1000 | Yarn type B (not acc. to invention) Twaron® 1000f750 | Yarn type C (not acc. to invention) Twaron® 1000f500 |
|---|---|---|---|
| Linear density of the yarn (dtex) | 1151,0 | 1150,0 | 1148,0 |
| Number of filaments | 1000 | 750 | 500 |
| Linear density of the individual filaments (dtex) | 1,15 | 1,53 | 2,30 |
| Yarn twist (t/m) | 178,6 | 179,6 | 184,4 |
| Yarn strength (N) | 222,7 | 214,0 | 210,6 |
| Specific yarn strength (mN/tex) | 1934,8 | 1860,8 | 1834,4 |
| Elongation at break (%) | 3,4 | 3,4 | 3,5 |
| FASE 1% (N) | 52,5 | 51,2 | 49,8 |
| FASE 2% (N) | 116,2 | 112,2 | 107,7 |
| TASE 1% (mN/tex) | 455,9 | 444,9 | 433,4 |
| TASE 2% (mN/tex) | 1009,5 | 976,5 | 938,2 |
| Loop strength (N) | 203,8 | 184,4 | 164,0 |
| Relative loop strength (%) | 45,8 | 43,1 | 38,9 |
| Specific loop strength (mN/tex) | 885,3 | 801,7 | 714,3 |
| Static Bursting Pressure (average value) (bar) | 16,9 | 15,5 | 12,7 |
| Bursting pressure after dynam./mechanical load 2.10⁵ pressure pulses) (average) (bar) | 12,8 | 10,8 | 8,5 |

4

FASE is an abbreviation of "Force At Specified Elongation." FASE 1% and FASE 2% indicate the force which develops in the yarn at elongations of 1% and 2%, respectively.

TASE is an abbreviation of "Tension At Specified Elongation." TASE 1% and TASE 2% indicate the tension which develops in the yarn at elongations of 1% and 2%, respectively.

The linear density was determined in accordance with ASTM-D885M and D1907, option 1.

The properties listed in the table, twist, strength, specific strength, elongation at break, FASE, and TASE, were all determined in accordance with standardised measuring methods.

The loop strength was determined primarily in accordance with ASTM-D3217 and D2256.

The static and the dynamic bursting pressure were measured on radiator hose. The different yarn types, A, B, and C, were used to reinforce the radiator hose, giving three types of hose, viz. one type reinforced with A-type yarn and the other types reinforced with B- and C-type yarn. By and large, the manufacturing process for the hose was as follows:

The hose were manufactured with the aid of a Troester extruder, a Harry Lucas knitting machine, and a Schulz autoclave. The inner and the outer hose were extruded using a sulphur-containing EPDM compound.

Inner hose:

Inner diameter 25 mm
Wall thickness 2,2 mm

Knitted fabric:

The yarns were knitted on a continuous length of inner tube with an 18-needle, 6-head feed. The knitting pattern was plain stitch with a mesh of 3,1 mm.

Outer hose:

The outer hose was provided over the same continuous length. The overall thickness of the wall was 4 mm.

Cutting:

After the outer hose had been provided, the hose ("greenstock") was cut to length to make a 1HO 121 101A Volkswagen hose.

Vulcanising:

The 1HO 121 101A hose was steam vulcanised at 180°C for 18 minutes to give it the appropriate shape. A 40% vacuum was applied to fill the autoclave with steam.

After the vulcanisation two hose of each group were subjected to a bursting test. In this test the hose were filled with water under pressure. To determine the static bursting pressure the water pressure was increased incrementally and kept constant for some time after each increment, until the hose burst. The water pressure being applied in that instant was listed as the static bursting pressure, which is given in the table.

Fatigue (pulse) test:

The hose were subjected to a dynamic/mechanical/thermal load. The conditions for this test were as follows: Test liquid ethylene glycol/water = 80%/20% (% by volume)

Pulse:      liquid temperature 130°C
minimum pulse pressure 1,7 bar
maximum pulse pressure 3,7 bar
pulse shape: block
  number of pressure pulses 200 000; frequency 1,7 sec.

vibration:      Flex length 1 mm
Flex frequency 300 cycles/min.

After the fatigue test the dynamic/mechanical bursting pressure (DBP) was determined in the same way as the aforementioned static bursting pressure.

As is clear from the table, the radiator hose in which, according to the invention, Twaron®1000f1000 yarn is employed has substantially higher static and dynamic bursting pressures. This means that the fatigue resistance of a radiator hose according to the invention reinforced with Twaron®1000f1000 yarn (type A) likewise is superior to that of a hose reinforced with Twaron®1000f750 yarn or Twaron®1000f500 yarn.

The term products capable of taking mechanical load used here refers to products which are subject to regular or irregular cyclic loading and/or repetitive loading during operation. For these products fatigue resistance is of particular importance. Examples of such products include radiator hose, high pressure hose, drive belts and V-belts, conveyor belts, pneumatic tyres for cars, bicycles, and aircraft.

The invention is directed primarily to products capable of taking mechanical load comprising fibres of aromatic polyamides, with the reinforcement of the elastomeric matrix being made up entirely or virtually entirely of fibres of aromatic polyamide. Of course, the invention also comprises products capable of taking mechanical load comprising reinforcing fibres of aromatic polyamide in which in addition to fibres of aromatic polyamide other reinforcing materials have been employed, e.g., fibres of polyester or rayon or cotton or steel cord. Besides fibres of PPDT, fibres or filaments having the aforementioned low filament count which are made of poly-p-phenylene-3,4'-diphenyl ether terephthalamide may be used according to the invention.

## Claims

1.    Product capable of taking mechanical load, comprising reinforcing fibres of aromatic polyamide, characterised in that the individual fibres have a linear density of 0,8 to 1,3 decitex.

2.    Product according to claim 1, characterised in that the individual fibres have a linear density of 1,0 to 1,2 decitex.

3.    Product according to claim 1 or 2, characterised in that the fibres are provided in a matrix material.

4.    Product according to claim 3, characterised in that the matrix is made of an elastomeric material.

5.    Product according to any one of the preceding claims, characterised in that the fibres are made of poly-paraphenylene terephthalamide or poly-p-phenylene-3,4'-diphenyl ether terephthalamide.

6.    Product according to any one of the preceding claims, characterised in that the fibres are employed in the form of filament yarns, which have a twist of 50 to 600 tpm.

7.    Product according to claim 6, characterised in that the filament yarns contain 400 to 3000 filaments.

8.    Product according to any one of the claims 3 - 7, characterised in that the product is a hose, a drive belt, a conveyor belt or a pneumatic tyre.

9.    Product according to claim 8, characterised in that the product is a hose, the fibres are employed in filament yarns, and the yarns are present in the matrix in a knitted fabric, braid or spiralised form.

10.  A process for manufacturing a product capable of taking mechanical load, comprising a matrix and reinforcing fibres of aromatic polyamide, characterised in that fibres are used having a linear density of 0,8 to 1,3 decitex.

European Patent Office

# EUROPEAN SEARCH REPORT

Application Number

EP 94 20 0261

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 138 011 (ASAHI KOGYO KABUSHIKI KAISHA)<br>* page 5, line 9 - page 6, line 7 *<br>* page 14, line 3 - line 21; claim 1; examples 1-4; table 1 *<br>--- | 1-5,8-10 | D01F6/60<br>B29D23/22<br>B29D29/00<br>B29D30/06<br>F16L11/08<br>//B29K21:00, |
| A | DE-A-40 26 161 (THE YOKOHAMA RUBBER CO., LTD.)<br>* page 2, line 23 - line 55 *<br>* page 3, line 27 - line 43 *<br>--- | 1,3-6, 8-10 | B29K105:06 |
| A | EP-A-0 240 936 (BANDO CHEMICAL INDUSTRIES, LTD., ASAHI YUKIZAI KOGYO KABUSHIKI KAISHA)<br>* page 12, line 18 - page 13, line 9 *<br>--- | 1,3-8,10 | |
| A | EP-A-0 021 485 (AKZO N.V.)<br>* page 5, line 24 - line 31 *<br>* page 23, line 15 - page 24, line 4; claim 1 *<br>--- | 1,6,7,10 | |
| D,A | EP-A-0 168 879 (AKZO N.V.)<br>* tables 1,2 *<br>--- | 1,7,10 | TECHNICAL FIELDS SEARCHED (Int.Cl.5) |
| A | EP-A-0 388 878 (E.I. DU PONT DE NEMOURS AND COMPANY)<br>* table 1 *<br>--- | 1,6,10 | D01F<br>C08J<br>B29D<br>F16L<br>B60C |
| A | US-A-3 977 172 (J.N. KERAWALLA)<br>* example 1 *<br>--- | 1 | |
| A | EP-A-0 420 333 (AKZO N.V.)<br>* claims 1,2,4 *<br>--- | 1 | |
| A | EP-A-0 331 156 (E.I. DU PONT DE NEMOURS AND COMPANY)<br>* table 1 *<br>----- | 1 | |

The present search report has been drawn up for all claims

| Place of search | Date of completion of the search | Examiner |
|---|---|---|
| THE HAGUE | 22 March 1994 | Van Nieuwenhuize, O |